# EUROPÄISCHE PATENTSCHRIFT

(11) **EP 0 993 094 B1**
(45) Veröffentlichungstag und Bekanntmachung des Hinweises auf die Patenterteilung: **01.09.2004**
(21) Anmeldenummer: 99119717.9
(22) Anmeldetag: 05.10.1999
(51) Int. Cl.: H02J 13/00, H05B 37/02, H02G 3/16

(54) **Elektrisches Installationssystem**
Electrical wiring system
Système de câblage électrique

(30) Priorität: 06.10.1998 DE 19845960
(43) Veröffentlichungstag der Anmeldung: 12.04.2000
(73) Patentinhaber: Insta Elektro GmbH, 58511 Lüdenscheid (DE)
(72) Erfinder: Holtz, Friedhelm, Dipl.-Ing., 58511 Lüdenscheid (DE); Hidde, Axel, Dr.-Ing., 57076 Siegen (DE); Wiffel, Peter, Dipl.-Ing., 58239 Schwerte (DE); Reichstein, Harry, Dipl.-Ing. Dipl.-Wirtsch.-Ing., 44227 Dortmund (DE); Krause, Karl-Heinz, Dipl.-Ing., 58809 Neuenrade (DE); Nockemann, Frank, Dipl.-Ing., 58511 Lüdenscheid (DE); Winter, Andreas, Dr.-Ing., 44787 Bochum (DE)

(56) Entgegenhaltungen:
- EP-A- 0 436 804
- EP-A- 0 772 132
- EP-A- 0 833 426
- DE-A- 4 312 613
- DE-A- 4 404 474
- DE-A- 19 610 381
- DE-A- 19 619 175
- US-A- 5 739 507

## Beschreibung

Die Erfindung betrifft ein elektrisches Installationssystem gemäß dem Oberbegriff des Anspruchs 1.

Im Bereich der elektrischen Installationstechnik sind in den letzten Jahrzehnten neben den klassischen Lichtschaltern eine große Anzahl weiterer Steuergeräte am Markt eingeführt worden, mit denen die Arten der zu steuernden Lasten sowie die Steuerungsmöglichkeiten erweitert werden und/oder die Art der Bedienung des Installationsgerätes erleichtert wird. Die Installationstechnik wird durch Installationsbusse, wie den in EP0833426 beschriebenen EIB-Bus, begünstigt.

Als Last werden neben Glühlampen vielfältige Arten innovativer Leuchtmittel bzw. Vorschaltgeräten mit Leuchtmitteln sowie Rolladen und Jalousien, Motoren, Ventilatoren und so weiter gesteuert. Als Steuerungsmöglichkeit von Leuchtmitteln, Vorschaltgeräten mit Leuchtmitteln oder Motoren/Ventilatoren sind vor allem Phasenanschnittsteuerungen, Phasenabschnittsteuerungen, 1-10 V-Schnittstellen und digitale Ansteuerschnittstellen zu nennen. Mit Zeitschaltern und Zeitdimmern kann darüber hinaus Einschaltzeitdauer und gegebenenfalls die Abdimmzeit beeinflußt werden. Bei motorgetriebenen Jalousie- und Rolladenantrieben werden zur Ansteuerung der zwei Motorwicklungen meist Relaiskontakte verwendet.

Ein Installationsgerät, bestehend aus einem Aufsatz und einem Leistungseinsatz zum Anschluß der Last wird zur besseren Unterscheidung im weiteren als Hauptstelle bezeichnet.

Als Art der Bedienung von Installationsgeräten ist neben der manuellen Beeinflussung an der Hauptstelle, welche weiterhin in den meisten Fällen zusätzlich erwünscht ist, die Bedienung über Nebenstellen, Fernbedienungen oder Automatikschaltern, beispielsweise Passiv-Infrarot-Meldern zu nennen.

Elektronische Geräte mit den beschriebenen Funktionen, die für den Einbau in Unterputz-Installationsdosen mit 60 mm Durchmesser geeignet sind, sind Stand der Technik. Bei mechanischen Schaltern dienen Wechsel- und Kreuzschaltungen zur Erhöhung der Zahl der Bedienstellen für eine Last. Weiterhin sind bipolare Relais oder Schütze bekannt, die bei einfacher Verdrahtung eine Last mit einer Vielzahl von Tastern ansteuern können. Die Relais oder Schütze sind z. B. als Reihen-Einbaugeräte für Verteilerkästen verfügbar. Bei Dimmern mit Drehbetätigung ist beim Stand der Technik eine Einstellung der Dimmstellung von einer Nebenstelle nicht gegeben.

Elektronische Installationsgeräte für die Unterputzdose besitzen häufig eine Nebenstellenfähigkeit. Damit ist es möglich, Geräte mit Schaltausgängen von der Nebenstelle abwechselnd ein- und auszuschalten. Die auf dem Markt befindlichen Geräte zum Dimmen mit Nebenstelleneingang werten das Nebenstellensignal unterschiedlich aus. So sind Verfahren bekannt, die bei längerer Betätigung einer Nebenstelle die Dimmstellung zyklisch auf- und abdimmen und bei Maximal- und Minimalstellung eine definierte Zeit verweilen, um den Einstellvorgang zu erleichtern. Andere Verfahren verharren beim Maximum und/oder Minimum und warten auf eine erneute Betätigung zur Umkehr der Dimmrichtung. Bei allen bisherigen Verfahren zur Ansteuerung von Dimmern läßt sich die Hauptstelle von der Nebenstelle durch kurze Betätigung abwechselnd ein- und ausschalten. Die Bedienung von Tastdimmern wird manchmal kritisiert, weil sie nicht so intuitiv begreifbar ist wie die Bedienung von Drehdimmern.

Zur Funktion eines elektronischen Installationsgerätes sind im wesentlichen eine Bedieneinheit und ein Leistungseinsatz zum Schalten und/oder Dimmen erforderlich. Schon früh kam der Gedanke auf, diese Funktionsgruppen zu trennen, um für einen gemeinsamen Unterputz-Leistungseinsatz verschiedene Aufsätze anbieten zu können. Als weiterer Vorteil ergibt sich, daß man bei geeigneter Konstruktion die mechanischen Höhenunterschiede zwischen den bereits in Installationsdosen eingebauten Unterputzeinsätzen und den aufsteckbaren Aufsätzen ausgleichen kann.

Stand der Technik sind Kombinationen, bei denen mit gleichen Kurzhubtasten-Aufsätzen Dimmeinsätze für unterschiedliche Lampenlasten sowie Relaisschalter bedienbar sind. Außerdem kann mit dem gleichen Kurzhubtasten-Aufsatz ein Nebenstelleneinsatz angesteuert werden, wobei sich aus elektrischer Sicht eine Funktion wie ein mechanischer Installationstaster ergibt, der jedoch vorteilhafterweise das gleiche Aussehen und Bediengefühl wie der Tastdimmer/Tastschalter hat.

Ein frühes Beispiel für die Kombination aus verschiedenen Leistungseinsätzen und Aufsätzen zur fernbedienbaren oder automatischen Beleuchtung sind die folgenden Komponenten aus dem Katalog 1985 der Firma Albrecht Jung GmbH & Co KG, Postfach 1320, D-58569 Schalksmühle: Die Abdeckung mit Ultraschall-Bewegungssensor", Artikel-Nr. 263 ist kombinierbar mit dem Triac-Leistungseinsatz Zeitschalter 60-500W", Artikel-Nr. 253, dem Relais-Leistungseinsatz Zeitschalter 1000 W/VA", Artikel-Nr. 203, dem IR-Taster 220 V", Artikel-Nr. 230 und der Aktive Nebenstelle" für Zeitschalter, Artikel-Nr. 231. Der genannte IR-Taster 220 V" ist neben anderen Einsätzen dann wiederum für die Kurzhubtaste mit 8-Kanal IR-Empfänger und Wahlschalter", Artikel-Nr. 268 verwendbar. Entsprechende Komponenten wurden auch von anderen Firmen angeboten. Der bekannte Relais-Leistungseinsatz besitzt einen Nebenstelleneingang, bei dem zur Betätigung Phase auf den Nebenstelleneingang gelegt werden muß. Die Aufsätze sind so konzipiert, daß sie mit metallischen Federn die Anschlüsse von Phase, Neutralleiter und Nebenstelle adaptieren. Zur eigenen Spannungsversorgung bereitet der Aufsatz die adaptierte Netzspannung auf. Als Ausgang schalten diese Aufsätze Phase auf das Nebenstellensignal. Die beschriebene Technik hat den Nachteil, daß die Adaptierung der Netzspannung über Federn keine hohe Kontaktsicherheit bietet, und daß die Erzeugung der Betriebsspannung im Aufsatz das Volumen des Aufsatzes vergrößert und gegebenenfalls zusätzlich zu einer Spannungsversorgung des Einsatzes notwendig ist.

Weiterhin sind Kombinationen Stand der Technik, bei denen der Einsatz eine Betriebsspannung für den Aufsatz aufbereitet und diesen über Steckkontakte dem Aufsatz zur Verfügung stellt. Der Aufsatz enthält beispielsweise eine Empfängerstufe für eine Infrarot-Fernbedienung und bereitet das empfangene Infrarot-Fernbedienungssignal und parallel dazu das Signal der im Empfänger enthaltenen Kurzhubtaste als kurzes Steuersignal für den Tastdimm- oder Relaisschalteinsatz auf und stellt dies dem Einsatz über einen Steckkontakt zur Verfügung. Der Einsatz wiederum benutzt das Steuersignal des Aufsatzes parallel zu dem am Einsatz liegenden Nebenstellensignal, um den Schaltzustand bei einem UP-Schalteinsatz und zusätzlich den Dimmgrad bei einem Up-Tastdimmeinsatz zu steuern. In jedem Fall wird hierzu ein Schaltzustandsspeicher im Up-Einsatz benötigt. Als Beispiel für diesen Stand der Technik werden herangezogen: Der Katalog 1998 der Firma Gebr. Berker GmbH & Co, Postfach 1160, 58567 Schalksmühle (Tast-Dimmer für IR-Fernbediensystem 2751 auf Seite 33; Taste mit Empfänger für IR-Fernbediensystem 1740 auf Seite 58), der Katalog 1997 der Firma GIRA Giersiepen GmbH & Co. KG, Postfach 1220, D-42461 Radevormwald (IR-Tastdimmer-Einsatz für Glühlampen umschaltbar auf Memory-Funktion 530 00 auf Seite 23; IR-Empfängeraufsatz für IR-Tastdimmer, IR Schalter und IR Taster zum Empfang und zur Decodierung der Infrarot-Signale 540 auf Seite 28), der Katalog der Firma Albrecht Jung GmbH & Co KG, Postfach 1320, D-58569 Schalksmühle (IR-Dimmer 240 IRH auf Seite 23; Kurzhub-Taste mit IR-Empfänger und Wahlschalter für 8 Kanäle 561.07 IR auf Seite 65).

Weiterhin sind Kombinationen Stand der Technik, die neben den obengenannten Steckkontakten einen weiteren Steckkontakt für die Übergabe eines codierten Nebenstellensignals vom Einsatz an den Aufsatz beinhalten. Als Beispiel für diesen Stand der Technik werden herangezogen der genannte Katalog der Firma Berker (Universaleinsatz mit Relaiskontakt und Nebenstelleneingang 2937 auf Seite 38; Wächter 180 Up Standard-Aufsatz 1713 auf Seite 59), der genannte Katalog der Firma GIRA (Automatik-Schalter Triac-Einsatz für Glühlampen 836 00 auf Seite 30; Aufsatz Automatik-Schalter 832 auf Seite 47), der genannte Katalog 1998 der Firma Jung (Einsatz mit Relaiskontakt und Nebenstelleneingang 201 UE auf Seite 67; Standard-Aufsatz Automatik-Schalter 180 - 1,10 m CD 180 auf Seite 69). Bei den Aufsätzen handelt es sich um Automatikschalter auf Basis der Passiv-Infraroten Bewegungserkennung. Die Geräte sind Nebenstellenfähig und unterscheiden Nebenstellensignale von Nebenstellentastern und Nebenstellensignale von weiteren Automatikschaltern. Während ein Nebenstellensignal von einem Taster den Leistungseinsatz auf jeden Fall für die eingestellte Zeit einschaltet, schaltet das Nebenstellensignal eines weiteren Automatikschalters den Leistungseinsatz nur dann ein, wenn die weiteren Bedingungen für die automatische Lichtschaltung erfüllt sind. Im Beispiel ist dies die Unterschreitung einer definierten Helligkeit am Aufsatz des Leistungseinsatzes. Bei den Einsätzen handelt es sich um Schalteinsätze. Sie werden vom Aufsatz mit einem Dauersignal eingeschaltet. Aus diesem Grund ist in den Einsätzen kein Zustandsspeicher erforderlich.

Aus dem deutschen Gebrauchsmuster DE 93 21 350 U1 ist weiterhin eine Bedieneinheit für Installationsgeräte mit integrierter Elektronikeinheit bekannt, die sowohl für Dimmer zur Lampensteuerung als auch für Jalousiesteuerungen benutzt werden kann.

Nachteilig beim Stand der Technik ist die bisherige Art der Nebenstellenbetätigung, die bei Verwendung einer einadrigen Nebenstellenleitung kein gezieltes Aufdimmen bzw. Jalousie hochfahren und gezieltes Abdimmen bzw. Jalousie abfahren zuläßt. Ein weiterer Nachteil beim Stand der Technik besteht darin, daß es für verschiedene Anwendungen in der elektrischen Installationstechnik oft mehrere Gerätesysteme, sogenannte Baukästen nebeneinander gibt. Dies führt zu einer hohen Anzahl bestehender Komponenten und damit zu hohen Kosten der Produktpflege und Lagerhaltung sowie zu höherem Erklärungsbedarf. Die Kombination von solchen Baukästen hat bislang zu wirtschaftlich nicht vertretbaren höheren Kosten für die Einzelkomponenten, Ausschluß von diversen denkbaren Kombination von Aufsätzen und Einsätzen und/oder Unterschieden in der Bedienung am Installationsgerät und der Nebenstelle geführt.

Ausgehend von dem zuvor geschilderten Stand der Technik liegt der Erfindung die Aufgabe zugrunde, ein Installationssystem zu entwickeln, das auf Basis eines Unterputz-Leistungseinsatzes (2) und eines darauf aufsteckbaren Bedienteils (3a) mindestens zwei Betätigungsarten einer Nebenstelle (NST) über eine einzige Nebenstellenleitung (NL) der Hauptstelle (HST) mitteilt. Weiterhin soll eine funktional sinnvolle Untermenge der bei Hauptstellen verwendbaren Aufsätze (3a) unverändert als Nebenstellenaufsätze (3b) nutzbar sein.

Aufsätze werden hinsichtlich verschiedener Funktionalität und Komplexität unterschieden: Kurzhubtasten enthalten keine Logik.

Ein Automatikschaltaufsatz enthält beispielsweise einen Bewegungsmelder mit Passiv-Infrarot-Sensorik.

Sonstige Aufsätze sind beispielsweise Fernbedienungsempfänger oder Zeitschaltuhren. Einsätze werden in Nebenstellen und Leistungseinsätze unterschieden.

Des weiteren soll im einzelnen aufgabengemäß ein System von Geräten entwickelt werden, die folgende Bedingungen erfüllen:
a.) Die Schnittstelle (5) zwischen Einsatz und Aufsatz soll so codiert werden, daß bei der Verwendung eines Automatikschaltaufsatzes in Verbindung mit einem Leistungseinsatz (2) die im Aufsatz zur Verfügung stehende Helligkeitsinformation zur Feststellung einer Bewegung einbezogen werden soll, während bei der Verwendung des unveränderten Automatikschaltaufsatzes in Verbindung mit einem Nebenstelleneinsatz mit Neutralleiteranschluß (4b) die Helligkeitsinformation zur Feststellung einer Bewegung nicht einbezogen werden soll.
b.) Neben der Verwendbarkeit von Nebenstellen mit mindestens zwei Betätigungsarten soll die Verwendung von Installationstastern als Nebenstelle möglich sein.
c.) Das Installationssystem soll beim Einsatz zur Steuerung von Rolläden und Jalousien unter Weiterverwendung der beschriebenen Aufsätze (3a,3b) und Nebenstelleneinsätze (4a, 4b) dahingehend erweiterbar sein, daß Gruppen- und Zentralsteuerungen realisierbar sind.

Die beschriebene Aufgabe und ihre zugehörigen Unteraufgaben werden durch die Merkmale der Ansprüche 1 bis 10 gelöst.

Als Aufsätze sind beleuchtete und unbeleuchtete Kurzhubtasten, Zeitdimmaufsätze, Zeitschaltaufsätze, Zeitschaltuhraufsätze, Fernbedienungsaufsätze mit verschiedenen Übertragungsmedien und Bewegungsmelderaufsätze als Automatikschalter verwendbar. Daneben sind Aufsätze verwendbar, die zufällige Schaltfunktionen oder eine automatisch aufgezeichnete Betätigungsfolge wiedergeben. Weiterhin sind Lichtsteuersysteme in einen Aufsatz integrierbar, die das Licht in Abhängigkeit vom Tageslicht, von Bewegung, von mittels Fernbedienung und/oder Zeitschaltuhr eingestellter Zeitabhängigkeit dimmen und/oder schalten. Als Einsätze sind Relaisschalter z. B. zum Schalten von Beleuchtung oder Rolladen/Jalousien verwendbar, außerdem elektronische Schalter und Dimmer auf Basis von Triacs, MosFETs oder IGBTs, Steuerungen von digitalen Schnittstellen für adressierbare Leuchten oder Steuerung von Leuchten über eine 1-10 V Schnittstelle.

Die Schnittstellenauswertung kann in bekannter Weise durch einen Mikroprozessor erreicht werden.

Anhand eines Ausführungsbeispiels soll die Erfindung gemäß den Figuren 1 bis 4 näher erläutert und beschrieben werden. Es zeigt:
- Figur 1:: eine schematische Darstellung des Aufbaus einer Hauptstelle und einer Nebenstelle;
- Figur 2:: eine schematische Darstellung eines Mehrleiternetzes zur Beleuchtungssteuerung;
- Figur 3:: Zeichnung der mechanischen Codierung von Aufsätzen und Einsätzen;
- Figur 4:: eine schematische Darstellung eines Mehrleiternetzes für ein Jalousiesteuerungssystem;
- Figur 5:: eine schematische Darstellung eines Mehrleiternetzes für ein hierarchisches Jalousiesteuerungssystem.

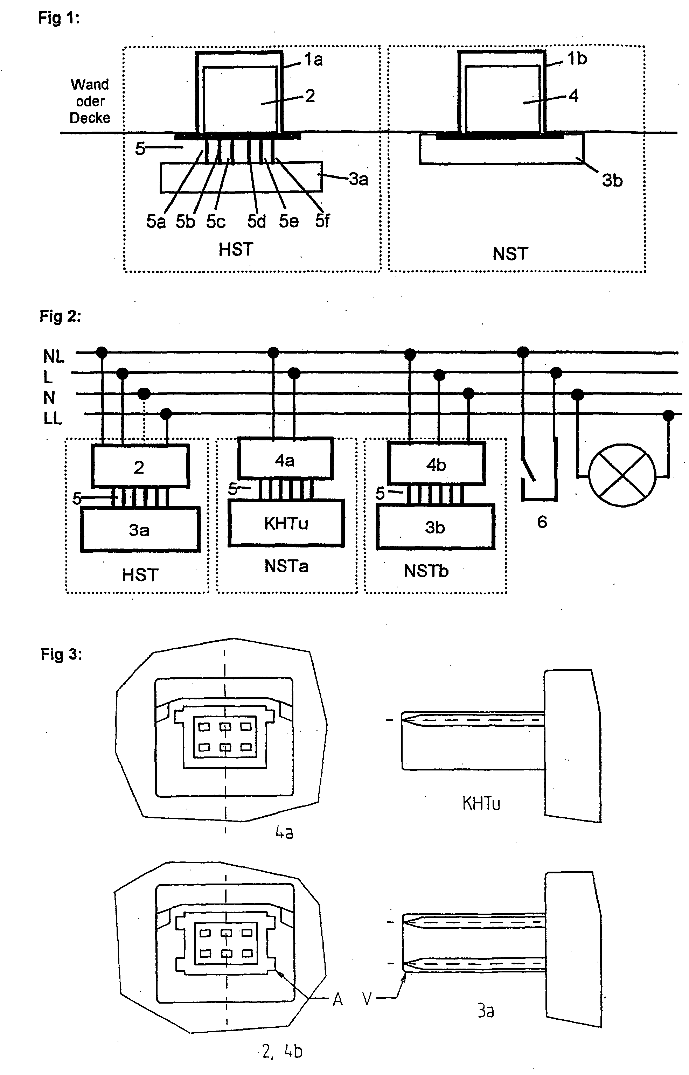

Figur 1 zeigt schematisch eine Installationsdose 1a, in die ein Leistungseinsatz 2 eingesetzt ist, auf das ein Bedienaufsatz 3a gesteckt wird. Entsprechend kann in eine weitere Installationsdose 1b ein Nebenstelleneinsatz 4 eingesetzt werden, auf den ein weiterer Bedienaufsatz 3b gesteckt ist. Zwischen dem Bedienaufsatz 3a und dem Leistungseinsatz 2 wird im Beispiel eine Schnittstelle 5 mit sechs Leitungen verwendet, bei der über einen Anschluß 5a die Schaltungsmasse geführt wird und über einen zweiten Anschluß 5b die Betriebsspannung. Die Schnittstelle kann so ausgeführt werden, daß die Betriebsspannung keine oder keine ausreichende Netztrennung hat und somit bei der Konstruktion der Aufsätze und der Befestigung der Aufsätze auf die Einsätze Sicherheitskriterien gemäß nationalen, europäischen und/oder internationaler Normen eingehalten werden müssen. Alternativ kann die Betriebsspannung im Unterputz-Einsatz so sicher vom Netz getrennt sein, daß am Aufsatz nur noch Sicherheitskleinspannung (SELV) anliegt.

Die verbleibenden vier Leitungen 5c, 5d, 5e, 5f der Schnittstelle 5 bei der beispielhaften Ausführung bestehen aus Steuerleitungen für die Steuerung des Einsatzes durch den Aufsatz, Übergabe der im Einsatz decodierten Steuerbefehle der Nebenstellenleitung an den Aufsatz und automatischen Abstimmung der Gerätefunktion zwischen Einsatz und Aufsatz anhand der Signalformen.

In Figur 2 ist ein Mehrleiternetz gezeigt, wobei mit NL eine Nebenstellenleitung, mit L eine Netzleitung auf Phasenpotential, mit N eine Netzleitung auf Neutralpotential und mit LL die Lastleitung gekennzeichnet ist. HST zeigt die Hauptstelle mit Leistungseinsatz 2 und Bedienaufsatz 3a sowie den Anschlüssen L, NL, LL und bei einigen Leistungsteilen wie z. B. dem Relaiseinsatz zusätzlich N. NSTa zeigt eine Nebenstelle mit einer unbeleuchteten Kurzhubtaste KHTu und einen Nebenstelleneinsatz 4a mit den Anschlüssen L und NL, während NSTb eine sonstige Nebenstelle mit einem beliebigen anderen Nebenstellenaufsatz 3b und Nebenstelleneinsatz 4b zeigt, der an L, N und NL angeschlossen ist. Mit 6 ist ein Installationstaster mit den Anschlüssen L und NL als weitere Form einer Nebenstelle gezeigt. Als Last ist beispielhaft für eine Beleuchtungseinrichtung eine Glühlampe zwischen LL und N gezeichnet.

Die in der Aufgabenstellung geforderten mindestens zwei Betätigungsarten der Nebenstelle und die Übertragung dieser Betätigung über die einadrige Nebenstellenleitung NL an die Hauptstelle stützt sich auf die rein analoge, nicht galvanisch vom Netz getrennte Steuerung.

Als Bezugspotential für die Nebenstellenleitung NL dient die Phase des Niederspannungsnetzes. Zum Grundprinzip der Codierung gehört, daß der Leistungseinsatz 2 einen Konstantstrom in die Nebenstellenleitung NL ausspeist, wobei die Spannung auf einen Maximalwert von z.B. 42 V begrenzt ist. Wenn keine Betätigung einer angeschlossenen Nebenstelle erfolgt, liegt die Nebenstellenleitung NL auf Maximalspannung, bezogen auf Phase. Mithilfe eines rein passiven Steuergerätes -im einfachsten Fall ist dies ein Taster mit einer in Reihe geschalteten Z-Diode- kann das Signal der Nebenstellenleitung auf einen festen Spannungswert größer Null Volt festgeklemmt werden. Diese festgeklemmte Spannung kann nun vom Leistungseinsatz 2 abgefragt werden und z.B. zum definierten Hoch- bzw. Herunterdimmen genutzt werden. Das Prinzip der Stromausspeisung und Steuerung über das Festklemmen auf einen bestimmten Spannungswert ist aus dem Bereich der elektronischen Vorschaltgeräte als 1 - 10 V-Steuerung hinlänglich bekannt, wie in DE 19619175, werden bestimmte Dimmwerte zur Erzeugung von Lichtszenen gesetzt werden.

Die zuvor beschriebene Codierung der Nebenstellenleitung NL ist auch bei Verwendung von Leistungseinsätzen ohne Neutralleiteranschluß, wie in 2 gezeigt, ohne Schwierigkeit auf acht unterscheidbare Zustände erweiterbar.

Weiterhin kann durch Anlegen des Phasenpotentials L auf die Nebenstellenleitung NL eine weitere Betätigungsart ermöglicht werden, wobei diese Betätigungsart die höchste Priorität besitzt. Hierzu können z.B. handelsübliche Installationstaster 6 oder Kontakte eines Stromstoßschalters verwendet werden. Die Auswertung dieser Art der Nebenstelle erfolgt im Beispiel durch einen Dimmer als Leistungseinsatz 2 mit abwechselndem Ein- und Ausschalten und bei längerer Betätigung in bekannter Weise mit zyklischem Auf- und Abdimmen.

Eine weitere Betätigungsart z. B. automatisches Lichtschalten wird ermöglicht durch Anlegen einer hochohmigen Impedanz auf der Nebenstellenleitung NL gegen Neutralleiterpotential N. Es können mehrere Nebenstelleneinsätze vom Typ 4a oder 4b und gleichzeitig mehrere Installationstaster 6 in Kombination mit einer Hauptstelle HST betrieben werden. Hierbei hat ein Installationstaster 6 die höchste Priorität. Die gleichzeitige Betätigung von mehreren Betätigungsflächen auf einer oder mehreren Nebenstellen führt stets zu eindeutigen Auswertungen durch die Hauptstelle HST, da die Betätigungsfläche, der die geringste festgeklemmte Spannung zugeordnet ist, ausgewertet wird.

In der beispielhaften Ausführung können folgende Betätigungsarten eines Nebenstellenaufsatzes 3b unterschieden werden: Betätigung der oberen Betätigungsfläche, Betätigung der unteren Betätigungsfläche und vollflächige Betätigung. Die Werte der diese Betätigungsarten darstellenden festgeklemmten Spannungen ergeben eine Prioritätsbildung dahingehend, daß die Betätigungsart mit einer kleinen zugeordneten Spannung Vorrang hat vor einer Betätigungsart mit einer höheren zugeordneten Spannung.

Bei der Verwendung eines unbeleuchteten Kurzhubtastenaufsatzes KHTu kann ein Nebenstelleneinsatz ohne Neutralleiteranschluß 4a verwendet werden. Da dieser Nebenstelleneinsatz 4a keine ausreichende Versorgungsspannung für andere Aufsatztypen aufbereiten kann und somit die elektrische Spezifikation der Schnittstelle 5 nicht einhalten kann, wird eine mechanische Verriegelung gemäß Figur 3 eingeführt: Alle Leistungseinsätze 2 und Nebenstellen mit Neutralleiteranschluß 4b verfügen über eine Aussparung A. Alle Aufsätze des Systems bis auf die unbeleuchtete Kurzhubtaste KHTu verfügen über eine zur Aussparung A korrespondierenden Vorsprung V und somit sind sämtliche Aufsätze des Systems aufsteckbar. Der Nebenstelleneinsatz ohne Neutralleiteranschluß 4a verfügt hingegen nicht über diese Aussparung A und die unbeleuchtete Kurzhubtaste KHTu verfügt nicht über den Vorsprung V. Somit kann ausschließlich die unbeleuchtete Kurzhubtaste KHTu auf den Nebenstelleneinsatz ohne Neutralleiteranschluß 4a aufgesteckt werden.

Ein Schwerpunkt der Erfindung liegt darauf, daß eine sinnvolle Teilmenge 3b der bei Leistungseinsätzen verwendbaren Aufsätze 3a unverändert auch auf einem Nebenstelleneinsatz betrieben werden können. Als Nebenstelleneinsätze unterscheidet man einen Typ mit Neutralleiteranschluß 4b und einen einfachen Typ ohne Neutralleiteranschluß 4a, an den wie beschrieben nur eine unbeleuchtete Kurzhubtaste KHTu angeschlossen werden darf. Beide Nebenstellen geben das Steuersignal Einschalten, Aufdimmen bzw. Jalousie auffahren einerseits und das Steuersignal Ausschalten, Abdimmen bzw. Jalousie abfahren andererseits an die Hauptstelle codiert weiter. Beim Nebenstelleneinsatz ohne Neutralleiteranschluß 4a wird über die Schnittstelle 5 das anliegende Phasenpotenial L an die unbeleuchtete Kurzhubtaste KHTu durchgeschleift. Die Kurzhubtaste gibt dieses Phasenpotential bei Betätigung der entsprechenden Betätigungsfläche an den Einsatz zurück, wo durch eine elektronische Schaltung die Spannung zwischen Phase L und Nebenstellenleitung NL festgeklemmt wird. Im Beispiel werden so Festspannungen von 3,6 V für eine vollflächige Betätigung, 7 Volt für die Betätigung der oberen Betätigungsfläche und 10 V für die Betätigung der unteren Betätigungsfläche erzeugt.

Die im Einsatz 2 bzw. 4b befindliche Stromversorgung für den Aufsatz 3a bzw. 3b stellt sicher, daß alle Aufsätze des Installationssystems mit ausreichendem Betriebsstrom versorgt werden, und daß hierbei die Spannung im festgelegten Toleranzbereich bleibt.

Ein Automatikschaltaufsatz kann einen Leistungseinsatz von einen Nebenstelleneinsatz dadurch unterscheiden, daß die Signale der Schnittstelle 5c-5f eine für den Nebenstelleneinsatz typische Codierung der Signalform aufweisen. Der Automatikschaltaufsatz wertet in Verbindung mit einem Nebenstelleneinsatz das Helligkeitssignal nicht aus, um auch bei geschalteter Beleuchtung Bewegung korrekt erkennen zu können.

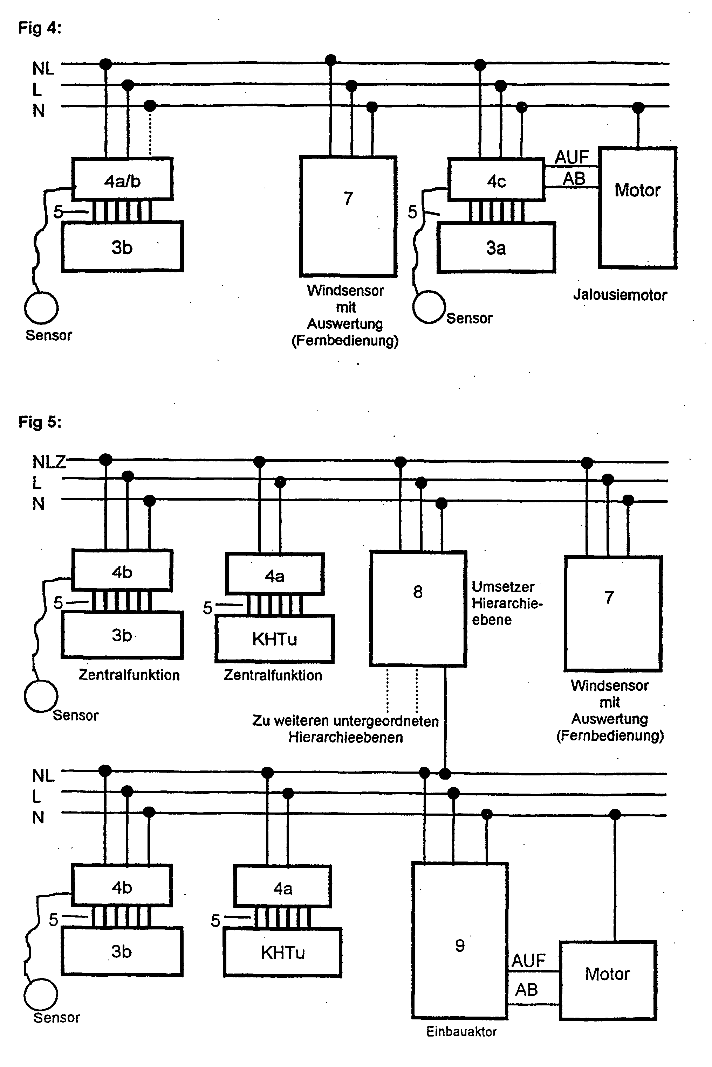

In Figur 4 ist die Verwendung des Installationssystems als Jalousie- oder Rolladensteuerungssystem gezeigt. Die beschriebene Art der Nebenstellencodierung läßt sich dabei vorteilhaft erweitern. Bei Jalousie- und Rolladensteuerungen macht die Verwendung eines Installationstasters zum zyklischen Auf- und Abfahren der Jalousien keinen Sinn. Statt dessen wird durch Belegung der Nebenstellenleitung mit Phasenpotential das Auffahren der Jalousie erzwungen. Diese Steuerungsart wird von einem Windsensor mit Umsetzer 7 genutzt, um ein fernbedientes Auffahren von Jalousien ab einer festen Windstärke zu erzwingen.

Durch die Verwendung eines Nebenstelleneinsatzes ohne Neutralleiteranschluß 4a in Verbindung mit einer unbeleuchteten Kurzhubtaste KHTu verringert sich die Zahl der für die Steuerung benötigten Einzelleiter gegenüber bekannten Systemen auf zwei, dies sind L und NL.

Bei Verwendung der beschriebenen Nebenstelleneinsätze mit Neutralleiteranschluß 4b in Verbindung mit Aufsätzen 3b werden drei Einzelleiter benötigt, dies sind L, N, NL.

Bei Verwendung spezieller Leistungseinsätze zur Ansteuerung von Jalousien oder Rolläden 4c werden fünf Einzelleiter benötigt, dies sind L, N, NL, AUF und AB.

Für die Einsätze mit Neutralleiteranschluß können als Bedienaufsätze z.B. beleuchtete und unbeleuchtete Kurzhubtasten, Tasten mit Speicherfunktionen, Zeitschaltuhren und Fernbedienungsaufsätze verwendet werden. Die Aufsätze oder die Einsätze können darüber hinaus Möglichkeiten zur Auswertung von Sensorsignalen, beispielsweise Dämmerungs- und Glasbruchsensoren beinhalten, wie in Fig. 4 gezeigt.

Fig. 5 zeigt eine Erweiterung des in Fig. 4 dargestellten Jalousiesystems zu einem hierarchischen System. Durch die Bereitstellung von Umsetzern 8 kann ein hierarchisches System mit Zentralsteuerungen -beispielsweise durch Zeitschaltuhren-, Gruppensteuerungen mehrerer Hierarchien und Einzelsteuerungen aufgebaut werden. Der Umsetzer 8 speist bei der Nebenstellenleitung der höheren Hierarchieebene NLZ in gleicher Weise wie ein Leistungseinsatz einen Konstantstrom aus und wertet die Spannung des Nebenstellensignals NLZ gleichzeitig aus, während der Umsetzer auf der Seite der niedrigeren Hierarchieebene die Nebenstellenleitung NL durch Festklemmen auf verschiedene Spannungswerte steuert. Den Befehlen Zentral-Auf und Zentral-Ab können hierbei z.B. höhere Z-Dioden-Spannungen zugeordnet werden, so daß die Auf- und Ab-Befehle der Einzelsteuerungen Vorrang vor den Zentralbefehlen haben. Ein Alarmsignal eines Windsensors wird innerhalb aller Hierarchiestufen durch Phasenpotential auf den Nebenstellenleitung NL, NLZ dargestellt.

Bei Installationssystemen zur Rolladen- oder Jalousiesteuerung gemäß Fig. 4 und Fig. 5 ergibt sich eine Alternative zu einem Unterputz-Leistungseinsatz 4c durch Einsatz eines Schaltaktors 9 in der Nähe des Jalousiemotors, also z.B. im Rolladenkasten. Vorteilhaft dabei ist, daß nur die drei Einzelleiter L, N und NL für die Verdrahtung der Kombination aus Motor und Schaltaktor benötigt werden. Auch Jalousiemotoren mit integriertem Aktor sind so machbar. Der Anschluß eines Schutzleiters bleibt hierbei außerhalb der Betrachtung.

Ein Beispiel für die Steuerfunktionen auf der Nebenstellenleitung NL in Fig. 5 und den zugeordneten Spannungen U₀ bis U₅ zwischen Nebenstellenleitung NL und Phasenpotential L wird im folgenden tabellarisch aufgeführt:
1) U₀ = 0 V → Steuerbefehl eines Windsensors zum Auffahren der Jalousie.
2) U₁ > U₀ → Steuerbefehl zum Hochfahren der Jalousie bzw. des Rolladens.
3) U₂ > U₁ → Steuerbefehl zum Runterfahren der Jalousie bzw. des Rolladens.
4) U₃ > U₂ → Steuerbefehl einer höheren Hierarchie zum Hochfahren der Jalousie bzw. des Rolladens.
5) U₄ > U₃ → Steuerbefehl einer höheren Hierarchie zum Runterfahren der Jalousie bzw. des Rolladens.
6) U₅ > U₄ → Leerlaufspannung, es liegt kein Steuerbefehl an.

## Patentansprüche

1. Elektrisches Installationssystem, bestehend aus einem Leistungseinsatz und einem Bedienaufsatz zum Erhalt eines Dimmers oder Schalters oder Jalousieschalters für handelsübliche Installationsdosen mit manueller oder fernbedienbarer Betätigung mit mindestens zwei getrennten Betätigungsarten oder automatischer Betätigung sowie der Möglichkeit zum Anschluss einer oder mehrerer Nebenstellen, die ihrerseits aus einem Nebenstelleneinsatz sowie einem Bedienteil mit mindestens zwei getrennten Bedienungsarten bestehen, wobei der Leistungseinsatz der Hauptstelle einen Konstantstrom oder bei Leerlauf eine Konstantspannung bezogen auf Phase in die einadrige Nebenstellenleitung ausspeist, **dadurch gekennzeichnet, dass** durch Festklemmen der Nebenstellenspannung durch die Nebenstelle (NSTa, NSTb) auf einen festen Spannungswert größer oder gleich Null Volt gegen Phase (L) eine bestimmte Betätigungsart der Nebenstelle erkannt wird, und dass die für einen Nebenstelleneinsatz (4) verwendbaren Bedienteile (3b) den jeweiligen Bedienteilen des Leistungsaufsatzes (3a) entsprechen.

2. Elektrisches Installationssystem nach Anspruch 1, **dadurch gekennzeichnet, daß** alle Aufsätze (3a) bis auf unbeleuchtete Kurzhubtasten (KHTu) zur mechanischen Codierung einen Vorsprung (V) im Gehäuse haben, während alle Einsätze des Systems bis auf den Nebenstelleneinsatz ohne Neutraleiteranschluß (4a) eine entsprechende Aussparung (A) haben und somit alle Aufsätze des Systems aufsteckbar sind, und daß nur unbeleuchtete Kurzhubtasten (KHTu) ohne Vorsprung (V) auf den beschriebenen Nebenstelleneinsatz ohne Neutraleiteranschluß (4a) aufgesteckt werden können.

3. Elektrisches Installationssystem nach Anspruch 1, **dadurch gekennzeichnet, daß** alle Einsätze mit Ausnahme des Nebenstelleneinsatzes ohne Neutraleiteranschluß (4a) eine einheitliche Belegung aller Leitungen der Schnittstelle (5) besitzen und die Stromversorgung aller Aufsätze durch diesbezüglich gleiche Anforderung an alle Leistungseinsätze und die Nebenstelleneinsätze mit Neutraleiteranschluß (4b) sichergestellt ist.

4. Elektrisches Installationssystem nach Anspruch 1, **dadurch gekennzeichnet, daß** ein Automatikschaltaufsatz einen Leistungseinsatz (2) und einen Nebenstelleneinsatz mit Neutralleiteranschluß (4b) dadurch unterscheiden kann, daß die auf der Schnittstelle (5) liegenden Signale eine für den Nebenstelleneinsatz typische Codierung der Signalform aufweisen.

5. Elektrisches Installationssystem nach Anspruch 1, **dadurch gekennzeichnet, daß** der Einsatz der Hauptstelle (HST) das von einem Installationstaster (6) herrührende Nebenstellensignal von dem Nebenstellensignal einer Nebenstelle mit mehreren Betätigungsarten (NSTa, NSTb) unterscheiden und auswerten kann.

6. Elektrisches Installationssystem nach Anspruch 1 und 5, **dadurch gekennzeichnet, daß** ein oder mehrere Installationstaster (6) gemeinsam mit ein oder mehreren Nebenstellen mit mehreren Betätigungsarten (NSTa, NSTb) verwendet werden können.

7. Elektrisches Installationssystem nach Anspruch 1 und 5, **dadurch gekennzeichnet, daß** anstelle von einem Installationstaster (6) wenigstens ein Windsensor mit Auswertung (7) oder wenigstens ein Kontakt eines Relais oder Schützes verwendet werden kann.

8. Elektrisches Installationssystem nach Anspruch 1, **dadurch gekennzeichnet, daß** als Fernbedienung ein Windsensor mit Auswertung (7) dient, der durch Anlegen von Phasenpotential (L) auf die Nebenstellenleitung (NL) das Auffahren einer Jalousie ermöglicht.

9. Elektrisches Installationssystem nach Anspruch 1 und 8, **dadurch gekennzeichnet, daß** zur Steuerung von Jalousien und Rolläden mittels Zentral- und/oder Gruppensteuerungen ein Umsetzer (8) die Nebenstellensignale (NLZ) einer höheren Hierarchieebene auf die Nebenstellensignale (NL) einer niedrigeren Hierarchieebene umsetzt.

10. Elektrisches Installationssystem nach Anspruch 1, 8 und 9, **dadurch gekennzeichnet, daß** zur Steuerung von Jalousien und Rolläden die Nebenstellenleitung (NL) mit Signalen für Windalarm, Auffahren der Jalousie, Abfahren der Jalousie, zentraler Auffahrbefehl, zentraler Abfahrbefehl belegt werden kann, wobei die angegebenen Steuersignale in abfallender Priorität aufgeführt sind.

## Claims

1. Electrical installation system consisting of a power insert and an operator's control attachment for receiving a dimmer or switch or roller shutter switch for standard installation boxes that can be manually or remotely controlled with at least two separate operating modes or automatic operation as well as the option to connect one or more extension units which, in turn, comprise an extension unitinsert and an actuator with at least two separate operating modes, with the power insert of the main unit feeding out a constant current, or a constant current related to phase during no-load operations, to the single-wire extension unit line, **characterized by** the fact that a specific operating mode of the extension unit is recognized as a result of the extension unit voltage being clamped by the extension unit (NSTa, NSTb) to a fixed voltage rating that is greater than or equal to zero volts against phase (L), and that the actuators (3b) that can be used for an extension unit insert (4) correspond with the respective actuators of the power attachment (3a).

2. Electrical installation system in accordance with Claim 1, **characterized by the fact** that, with the exception of non-illuminated short-stroke push-buttons (KHTu), all attachments (3a) have a projecting part (V) in their housing for the purpose of mechanical orientation whilst, with the exception of the extension unit insert without neutral line terminal (4a), all inserts in the system have a corresponding cut-out (A), consequently enabling all attachments in the system to be affixed and that only non-illuminated short-stroke push-buttons (KHTu) without a projecting part (V) can be affixed onto the described extension unit insert without neutral line terminal (4a).

3. Electrical installation system in accordance with Claim 1, **characterized by** the fact that, with the exception of the extension unit insert without neutral line terminal (4a), all inserts possess a uniform assignment of all lines of the interface (5) and the current supply of all attachments is ensured as a result of equal demand on all power inserts and on the extension unit inserts with neutral line terminal (4b) in this respect.

4. Electrical installation system in accordance with Claim 1, **characterized by** the fact that an automatic switching attachment can distinguish between a power insert (2) and an extension unit insert with neutral line terminal (4b) as a result of the fact that the signals at the interface (5) feature a coding of the signal shape which is typical for the extension unit insert.

5. Electrical installation system in accordance with Claim 1, **characterized by** the fact that the insert of the main unit (HST) can distinguish the extension unit signal originating from an installation control switch (6) from the extension unit signal of an extension unit with more than one operating modes (NSTa, NSTb) and evaluate the same.

6. Electrical installation system in accordance with Claims 1 and 5, **characterized by** the fact that one or more installation control switches (6) can be utilized in combination with one or more extension units having several operating modes (NSTa, NSTb).

7. Electrical installation system in accordance with Claims 1 and 5, **characterized by** the fact that at least one wind sensor with evaluation (7) or at least one contact of a relay or contactor can be utilized instead of an installation control switch (6).

8. Electrical installation system in accordance with Claim 1, **characterized by** the fact that a wind sensor with evaluation (7) serves as a remote control and permits a roller shutter to be lowered as a result of applying phase potential (L) to the extension unit line (NL).

9. Electrical installation system in accordance with Claims 1 and 8, **characterized by** the fact that a converter (8) converts the extension unit signals (NLZ) of a higher hierarchical level to the extension unit signals (NL) of a lower hierarchical level for the purpose of controlling roller shutters and blinds by means of central and/or group controls.

10. Electrical installation system in accordance with Claims 1 and 8, **characterized by** the fact that signals for wind alarm, lowering the roller shutter, raising the roller shutter, central lowering command, central raising command can be assigned to the extension unit line (NL) for the purpose of controlling roller shutters and blinds, for which the specified control signals are given in descending priority.

## Revendications

1. Système d'installation électrique se composant d'un bloc emboîtable de puissance et d'un bloc rapporté de commande pour recevoir un variateur ou un commutateur ou un commutateur de rideau vénitien pour les prises d'installation usuelles dans le commerce, avec actionnement manuel ou télécommandé, présentant au moins deux modes d'actionnement séparés ou un actionnement automatique, ainsi que la possibilité de raccorder un ou plusieurs postes annexes qui se composent à leur tour d'un bloc emboîtable de poste annexe ainsi que d'un organe de commande présentant au moins deux modes d'actionnement séparés, système dans lequel le bloc emboîtable de puissance du poste principal alimente un courant constant ou, lors de la marche à vide, une tension constante en référence à la phase dans la ligne de poste annexe monoconducteur, **caractérisé en ce que** :
- un certain mode d'actionnement du poste annexe est reconnu en limitant la tension de poste annexe via le poste annexe (NSTa, NSTb) à une valeur de tension fixe supérieure ou égale à zéro volt par rapport à la phase (L) ; et
- les organes de commande (3b) pouvant être utilisés pour un bloc emboîtable de poste annexe (4) correspondent aux organes de commande respectifs du bloc rapporté de puissance (3a).

2. Système d'installation électrique selon la revendication 1, **caractérisé en ce que** :
- tous les blocs rapportés (3a) possèdent une saillie (V) dans le boîtier pour le codage mécanique, à l'exception des touches à faible course non éclairées (KHTu), tandis que tous les blocs emboîtables du système possèdent, à l'exception du bloc emboîtable de poste annexe sans raccord de conducteur neutre (4a), un évidement correspondant (A) et, de ce fait, tous les blocs rapportés du système sont enfichables ; et
- seules des touches à faible course (KHTu) non éclairées et sans saillie (V) peuvent être enfichées sur le bloc emboîtable de poste annexe décrit sans raccord de conducteur neutre (4a).

3. Système d'installation électrique selon la revendication 1, **caractérisé en ce que** tous les blocs emboîtables, à l'exception du bloc emboîtable de poste annexe sans raccord de conducteur neutre (4a), possèdent une affectation uniforme de toutes les lignes de l'interface (5) et l'alimentation en courant de tous les blocs rapportés est assurée par une demande identique quant à cela à tous les blocs rapportés de puissance et aux blocs emboîtables de poste annexe avec raccord de conducteur neutre (4b).

4. Système d'installation électrique selon la revendication 1, **caractérisé en ce qu'**un bloc rapporté de commutation automatique peut faire une différence entre un bloc emboîtable de puissance (2) et un bloc emboîtable de poste annexe avec raccord de conducteur neutre (4b), grâce au fait que les signaux appliqués sur l'interface (5) présentent une forme de signal avec codage typique pour le bloc emboîtable de poste annexe.

5. Système d'installation électrique selon la revendication 1, **caractérisé en ce que** le bloc emboîtable du poste principal (HST) peut faire une différence entre le signal de poste annexe provenant d'un bouton poussoir d'installation (6) et le signal d'un poste annexe présentant plusieurs modes d'actionnement (NSTa, NSTb), et l'évaluer.

6. Système d'installation électrique selon les revendications 1 et 5, **caractérisé en ce qu'**un ou plusieurs boutons poussoirs d'installation (6) peut (peuvent) être utilisé(e)s conjointement avec un ou plusieurs poste(s) annexe(s) présentant plusieurs modes d'actionnement (NSTa, NSTb).

7. Système d'installation électrique selon les revendications 1 et 5, **caractérisé en ce qu'**il est possible d'utiliser au moins un capteur de vent avec évaluation (7) ou au moins un contact d'un relais ou d'un commutateur de protection à la place d'un bouton poussoir d'installation (6).

8. Système d'installation électrique selon la revendication 1, **caractérisé en ce qu'**un capteur de vent avec évaluation (7) qui permet la remontée d'un rideau vénitien par l'application du potentiel de phase (L) sur la ligne de poste annexe (NL), sert de télécommande.

9. Système d'installation électrique selon les revendications 1 et 8, **caractérisé en ce que**, pour la commande des rideaux vénitiens et des rideaux déroulants au moyen des commandes centrales et/ou de groupe, un convertisseur (8) convertit les signaux de poste annexe (NLZ) d'un niveau hiérarchique plus haut en signaux de poste annexe (NL) d'un niveau hiérarchique plus bas.

10. Système d'installation électrique selon les revendications 1 et 8 et 9, **caractérisé en ce que**, pour la commande des rideaux vénitiens et des rideaux déroulants, la ligne de poste annexe (NL) peut être alimentée par des signaux pour l'alarme de vent, la remontée du rideau vénitien, la descente du rideau vénitien, l'instruction centrale de remontée et l'instruction centrale de descente, les signaux de commande indiqués étant listés dans la priorité décroissante.
